# FASCICULE DE BREVET EUROPEEN

(11) **EP 2 946 137 B1**
(45) Date de publication et mention de la délivrance du brevet: **13.10.2021**
(21) Numéro de dépôt: 14706875.3
(22) Date de dépôt: 14.01.2014
(51) Int. Cl.: F17C 1/14, F17C 13/08, F02C 6/16

(54) **DISPOSITIF POUR LE STOCKAGE ET LA RESTITUTION DE FLUIDES SOUS UNE PRESSION ÉLEVÉE QUASI CONSTANTE**
VORRICHTUNG ZUR LAGERUNG UND WIEDERGEWINNUNG VON FLÜSSIGKEITEN BEI NAHEZU KONSTANTEM HOCHDRUCK
DEVICE FOR STORING AND RESTORING FLUIDS AT A NEAR-CONSTANT HIGH PRESSURE

(30) Priorité: 17.01.2013 FR 1350405
(43) Date de publication de la demande: 25.11.2015
(73) Titulaire: FIVES, 75009 Paris (FR)
(72) Inventeur: FAVY, Claude, F-04400 Faucon de Barcelonnette (FR); DEVROE, Sébastien, F-59260 Hellemmes (FR)
(74) Mandataire: Plasseraud IP
(86) Numéro de dépôt international: PCT/FR2014/050064
(87) Numéro de publication internationale: WO 2014/111649

(56) Documents cités:
- WO-A2-2012/160311
- None

## Description

La présente invention concerne un dispositif de stockage d'un gaz comprimé en vue d'une utilisation pour un procédé industriel ou pour entraîner une turbine afin de produire de l'électricité.

L'utilisation de gaz comprimé et plus particulièrement d'air comprimé représente un poste majeur dans la plupart des secteurs industriels de nos jours. On peut citer sans que cela soit exhaustif les secteurs de l'aéronautique, du spatial, de l'agro- alimentaire, de l'automobile, de la chimie, de la métallurgie, de la verrerie, du pétrole ou encore du verre. La production d'air comprimé utilise à elle seule 10% de l'électricité consommée par l'industrie.

Le stockage avec une grande capacité de ces gaz aux pressions d'utilisation couramment employées dans l'industrie, qui vont de six jusqu'à quelques dizaines de bars, est peu employé compte tenu des faibles densités de stockage et des pressions de restitution variables.

A ce jour, les installations de stockage de gaz de capacité importantes utilisent des cavités souterraines naturelles ou artificielles.

Les cavités souterraines nécessitent un contexte géologique particulier en termes d'étanchéité, de pression admissible par la roche environnante et de risque sismique. Les possibilités de lieux d'implantation sont donc limitées et ne correspondent pas nécessairement aux localisations où le stockage de l'énergie électrique est souhaité, par exemple à cause de leur éloignement des lieux de consommation ou de production, ou de l'insuffisance du réseau électrique dans ces lieux.

Un des inconvénients majeurs de ces installations est qu'elles ne permettent pas le maintien d'une pression constante lors des opérations de stockage et de déstockage de l'air.

Cela nécessite alors soit une installation de compression pouvant fonctionner à pression de sortie variable, une installation de détente pouvant fonctionner à pression d'entrée variable et une utilisation du stockage d'air limitée à un intervalle de pression correspondant à l'intervalle de pression dans lequel peuvent fonctionner les installations de compression et de détente, soit de réguler la pression de sortie du stockage à la valeur minimum de l'intervalle de fonctionnement du stockage. Ces variations de pression influent grandement sur le rendement de l'installation ainsi que sur la capacité utile du stockage d'air comprimé. A titre d'exemple, l'installation de Huntorf en Allemagne utilise un stockage souterrain de 310 000 m3 dans l'intervalle de pression de 43 à 70 bars. L'installation de Mac Intosh aux USA utilise un stockage souterrain de 370 000 m3 dans l'intervalle de pression de 45 à 80 bars. On peut remarquer que les pressions maximum, compte tenu des contraintes de stabilité des cavités souterraines, se limitent à 80 bars et que l'intervalle de pression d'utilisation est d'environ 40 bars. Ces deux facteurs limitent considérablement l'énergie pouvant être stockée par unité de volume du réservoir.

Un concept a été proposé dans le document US 4355923 permettant, dans le cadre d'une cavité souterraine, d'obtenir une pression constante grâce à la mise en relation de la cavité avec un réservoir hydraulique situé plus haut. Ce concept nécessite à la fois des conditions géologiques très particulières et limite la pression dans le réservoir à la pression hydrostatique générée par le réservoir hydraulique.

Plus récemment, deux concepts de stockage de gaz sous marins ont été proposés, l'un faisant appel à un réservoir sous marin déformable, comme dans le document US 6863474 B2, et l'autre à un réservoir sous marin rigide, comme dans le document US 7735506 B2, permettant de maintenir la pression du gaz à la pression hydrostatique régnant à la profondeur où est implanté le stockage. Le fait de pouvoir maintenir une pression constante lors des opérations de stockage et de déstockage du gaz constitue un atout majeur de ces concepts. Cependant, il est certain, s'agissant d'installations sous marines à grande profondeur, qu'elles seront complexes et coûteuses à mettre en oeuvre et à opérer.

Ces deux concepts ont également l'inconvénient de ne pouvoir fonctionner qu'à une pression correspondant à la pression hydrostatique régnant à la profondeur où est implanté le stockage.

Or, il apparaît que pour un type de réservoir donné, on a intérêt économiquement à stocker le gaz à la pression maximum compatible à la fois avec les contraintes mécaniques dans le matériau constituant le réservoir et avec les épaisseurs maximum pouvant être mises en œuvre techniquement. Il est donc d'un grand intérêt de pouvoir choisir la pression dans le stockage indépendamment de l'environnement extérieur.

Le réservoir doit pouvoir résister à des contraintes, dues notamment à la pression du gaz qui est stocké, les plus importantes possibles. Toutefois, il doit également être d'un encombrement minimal pour pouvoir être implanté facilement, par exemple sur le lieu d'un site industriel. Un autre type de stockage est divulgué dans le document WO 2012 / 160311.

Le dispositif selon l'invention permet d'apporter une réponse à ces difficultés. Notamment :
- il permet de stocker et déstocker un gaz dans une enceinte rigide, à très haute pression quasi constante grâce à un liquide, cette pression pouvant être choisie indépendamment des conditions de pression dans l'environnement du stockage, notamment la pression hydrostatique dans le cas d'un stockage sous l'eau ;
- la partie stockage du dispositif peut être installée à terre, sans nécessiter un contexte géologique ou topographique particulier, ou sous l'eau, ce qui permet alors de bénéficier de la pression hydrostatique régnant au niveau du stockage à la fois en termes de résistance de l'enceinte et de pressions de pompage et de turbinage hydrauliques réduites,
- il permet de limiter l'encombrement tout en conservant un volume stocké optimal.

Par ailleurs :
- le dispositif permet d'assurer l'étanchéité du gaz vis-à-vis du liquide pour maintenir le gaz à pression quasi constante ;
- il permet avantageusement d'installer la partie de stockage aussi bien dans une position verticale qu'horizontale et même dans une position inclinée ;
- il permet de limiter l'effet des fuites de la partie de stockage qui résulterait des défauts d'étanchéité du système de séparation gaz / liquide.

En outre :
- le dispositif peut être utilisé pour garantir un stockage du gaz peu coûteux pour une utilisation industrielle du gaz à une pression inférieure à la pression de stockage,
- le dispositif peut avantageusement être implanté directement sur un site industriel pour profiter des installations du site et également pour fournir les installations du site.

A cet effet, l'invention concerne un dispositif de stockage et de restitution de fluides à pression quasi constante, tel que défini par la revendication 1.

De préférence, le diamètre du tube métallique est égal à 48" (1219 mm) ou 56" (1422 mm).

Avantageusement, le tube est obtenu par formage et soudage d'une bande métallique laminée à plat.

Pour limiter le nombre de réservoirs pour une capacité de stockage donnée, l'enveloppe cylindrique extérieure comprend une pluralité de tubes métalliques soudés bout à bout.

Le dispositif offre ainsi de nombreuses possibilités d'utilisation, pour stocker et restituer un gaz à une pression déterminée, et trouve de nombreuses application, dans les domaines de l'énergie et de tout procédé industriel utilisant un gaz comprimé.

De préférence, le dispositif comprend des moyens de séparation entre le gaz et le liquide dans le réservoir de stockage des fluides, de manière à éviter le mélange entre le gaz et le liquide.

Selon un mode de réalisation les moyens de séparation comprennent une membrane déformable flottant à la surface du liquide.

Selon un autre exemple de réalisation, les moyens de séparation comprennent une membrane déformable sous la pression dans le réservoir de stockage des fluides pour accompagner les variations de volume de la partie contenant le liquide et de la partie contenant le gaz.

Cet autre exemple de réalisation se décline en deux variantes principales :
- la membrane constitue une épaisseur de matière placée entre le liquide et le gaz. Elle est fixée au réservoir sur l'ensemble de sa périphérie.
- la membrane constitue une vessie, ou baudruche, pouvant indifféremment contenir le gaz ou le liquide.

Dans le cas d'une vessie, celle-ci peut avantageusement être contenue dans une enveloppe interne qui peut être un simple grillage métallique ou une paroi en métal déployé ou perforé. Cette enveloppe interne permet de délimiter le volume pouvant être occupé par la membrane déformable, et/ou de maintenir celle-ci dans une position définie dans le réservoir et/ou d'éviter que la membrane ne frotte directement contre la paroi du réservoir.

Selon un autre exemple, les moyens de séparation entre le gaz et le liquide comprennent un diaphragme rigide et mobile définissant une surface de séparation entre le liquide et le gaz dans le réservoir de stockage des fluides, et comprenant des surfaces d'appui sur le réservoir de stockage des fluides, les surfaces d'appui étant décalées de part et d'autres de la surface de séparation.

Une telle disposition pourra être mise en œuvre dans tout réservoir de stockage de fluides comprenant plusieurs fluides.

Les surfaces d'appui décalées de la surface de séparation permettent d'éviter le basculement du diaphragme rigide sous l'effet de la distribution non uniforme des pressions sur le diaphragme, qui causerait des fuites entre la partie contenant le liquide et la partie contenant le gaz.

De préférence, le diaphragme est muni de joints d'étanchéité à sa périphérie, pour assurer l'étanchéité entre la partie contenant le gaz et la partie contenant le liquide.

De plus, les surfaces d'appuis du diaphragme peuvent être munies de mécanismes de roulement pour faciliter le mouvement du diaphragme dans le réservoir de stockage des fluides et accompagner les variations de volume de la partie contenant le liquide et de la partie contenant le gaz.

Les surfaces d'appui peuvent être continues sur la périphérie du diaphragme, être réparties de manière discontinue sur la périphérie du diaphragme ou encore présenter pour chaque surface d'appui une surface unitaire avec le réservoir différente selon la surface d'appui.

De manière particulièrement avantageuse, la partie contenant du liquide est reliée à la partie contenant du gaz d'une part par une première canalisation munie d'une pompe, permettant de ramener du liquide dans la partie contenant le gaz vers la partie contenant le liquide et d'autre part par une deuxième canalisation munie d'un compresseur, permettant de ramener du gaz dans la partie contenant le liquide vers la partie contenant le gaz.

Cette disposition trouve un intérêt particulier dans le cas où le réservoir est posé au sol et présente une inclinaison par rapport à l'horizontal. Ainsi, en cas de défaillance du diaphragme, et ce pour tout type de réservoir de stockage de fluides, provoquant une fuite de liquide vers la partie contenant le gaz et inversement, une fuite du gaz vers la partie contenant le liquide, ces fuites sont récupérées.

Le dispositif pourra comprendre par ailleurs les dispositions suivantes, seules ou en combinaison :
- l'orifice d'entrée du liquide est confondu avec l'orifice de sortie du liquide,
- l'orifice d'entrée du gaz est confondu avec l'orifice de sortie du gaz,
- le dispositif comprend une pluralité de réservoirs de stockage des fluides, et comprend un ensemble de vannes sur les orifices d'entrée et de sortie du gaz et un ensemble de vannes sur les orifices d'entrée et de sortie du liquide permettant de choisir les réservoirs pour lesquels le gaz est injecté et les réservoirs pour lesquels le gaz est évacué.

Avantageusement, le dispositif utilise de l'air et de l'eau, largement disponibles et peu coûteux.

Eventuellement, l'installation de sortie peut comprendre des moyens pour mettre le gaz à la pression requise par l'installation industrielle de manière à délivrer à l'installation le gaz à une pression déterminée à moindre coût.

Selon un mode de réalisation particulièrement avantageux, le dispositif est associé à des moyens de décharge du liquide qui comprennent un ensemble générateur relié à l'orifice de sortie du liquide, l'ensemble générateur comprenant une turbine et un générateur, le liquide évacué passant par la turbine pour générer de l'énergie électrique par le générateur.

Un système de régulation et de commande de l'ensemble moteur et un système de régulation et de commande de l'ensemble générateur permettent de contrôler respectivement leur puissance ainsi que la pression dans le réservoir de stockage des fluides, pour permettre différents régimes de fonctionnement.

Ainsi, le dispositif selon l'invention peut être utilisé pour stocker et restituer un gaz comprimé dans le cadre d'un procédé comprenant les étapes suivantes :
- une étape de stockage du gaz, comprenant les opérations suivantes :
   - compression du gaz dans une installation de compression,
   - injection du gaz dans le réservoir de stockage des fluides par l'orifice d'entrée du gaz,
   - simultanément à l'injection du gaz, évacuation du liquide vers un ensemble générateur par l'orifice de sortie du liquide, le système de régulation et de contrôle de l'ensemble générateur pour évacuer le liquide maintenant la pression constante dans le réservoir de stockage des fluides,
- une étape de restitution du gaz, comprenant les opérations suivantes :
   - injection du liquide depuis la source de liquide par l'orifice d'entrée du liquide dans le réservoir de stockage des fluides,
   - simultanément à l'injection du liquide, évacuation du gaz vers une installation de sortie, le système de régulation et de contrôle de l'ensemble moteur pour injecter le liquide maintenant la pression constante dans le réservoir de stockage des fluides.

Ce régime de fonctionnement permet de stocker et de restituer le gaz à une pression quasiment constante tout au long des étapes, ce qui est particulièrement avantageux pour produire de l'énergie mais également pour fournir en gaz une installation industrielle.

Les dessins annexés illustrent l'invention :
- la figure 1 représente un schéma général d'un exemple d'application du dispositif de stockage et de restitution d'un gaz comprimé pour le stockage et la restitution d'énergie électrique ;
- la figure 2 représente une vue d'ensemble d'un réservoir de stockage de fluides selon un exemple ne faisant pas partie de l'invention
- la figure 3 représente une vue plus détaillée d'un réservoir de stockage de fluides selon un exemple ne faisant pas partie de l'invention et comprenant un diaphragme rigide pour la séparation gaz /liquide ;
- la figure 4 est une vue en coupe transversale d'un autre exemple ne faisant pas partie de l'invention du réservoir dans lequel la séparation gaz / liquide dans le réservoir de stockage est obtenue par une membrane déformable fixée sur l'ensemble de sa périphérie au réservoir, la membrane étant représentée sur les figures 4.1 et 4.2 respectivement dans deux positions différentes,
- la figure 5 représente un mode de réalisation du réservoir dans lequel la séparation gaz / liquide dans le réservoir de stockage est obtenue par une vessie, et
- la figure 6 représente un exemple avec plusieurs réservoirs de stockage des fluides et ne faisant pas partie de l'invention car le type de réservoir qui y est représenté ne fait pas partie de l'invention.

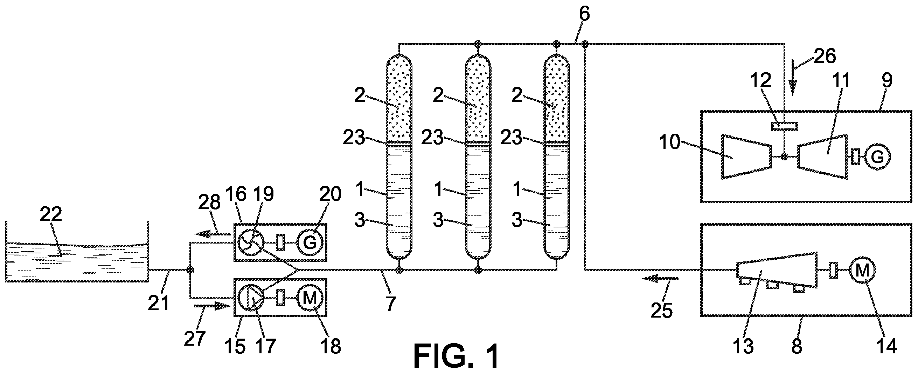

La figure 1 représente un schéma général d'un dispositif de stockage et de restitution d'un gaz selon une des dispositions possible de l'invention. Sur cette figure, le dispositif représenté comporte trois réservoirs 1 rigides de stockage de fluides dans lesquels la pression d'un gaz est maintenue constante grâce à un liquide, sachant que le nombre de réservoirs est adapté à la capacité de stockage requise. Avantageusement, dans ce qui suit, les fluides utilisés sont de l'air comme gaz, et de l'eau comme liquide, étant entendu toutefois qu'un autre gaz et un autre liquide pourront être utilisés.

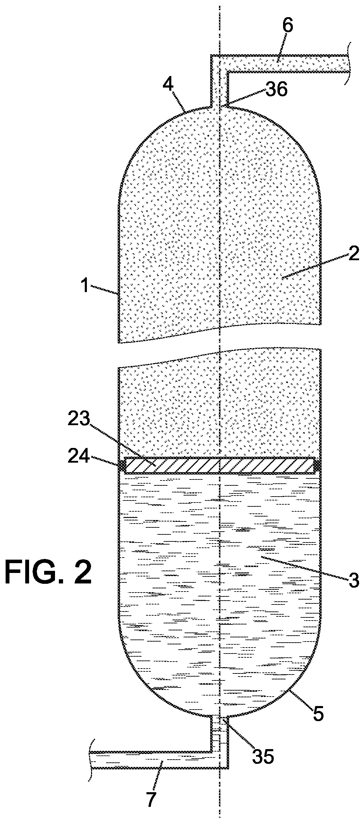

Le réservoir 1 de stockage de fluides est représenté plus en détail dans la figure 2. Son épaisseur et sa conception permettent de résister à la pression interne des fluides qu'il contient. Le corps du réservoir 1 de stockage des fluides peut être de forme cylindrique et muni à ses extrémités de fonds 4 et 5 classiquement de forme hémisphérique ou semi-elliptique afin d'offrir la meilleure résistance aux contraintes dues à la pression des fluides stockés.

Le réservoir 1 de stockage des fluides présente une enveloppe extérieure cylindrique qui comprend au moins un tube métallique, par exemple en acier, du type de ceux utilisés pour les gazoducs et les oléoducs. Un tel tuyau est élaboré par exemple par formage, tel que le roulage, et soudage à partir d'une bande laminée à plat. Celui-ci peut également être obtenu par d'autres procédés de mise en forme.

Le diamètre extérieur du tube formant l'enveloppe du réservoir est choisi supérieur à 32" (pouces), soit 813 mm (millimètres), tandis que la longueur du réservoir est choisie de telle sorte que le rapport entre la longueur du réservoir et son diamètre extérieur est avantageusement supérieur à 8.

Le choix du diamètre extérieur du réservoir et du rapport entre sa longueur et son diamètre résulte de considérations techniques et économiques. Les simulations réalisées en prenant en compte notamment les contraintes techniques liées au stockage, les coûts de fabrication des réservoirs et les contraintes d'implantation sur site ont montré qu'un diamètre de réservoir supérieur à 32" et un rapport entre sa longueur et son diamètre supérieur à 8 permettent d'obtenir une configuration fournissant un compromis avantageux pour répondre aux différentes contraintes.

Par « longueur », on entend ici la dimension la plus grande mesurée sur le réservoir.

Par « diamètre », on entend ici la dimension la plus grande mesurée sur une section transversale du réservoir.

A titre d'exemples, un tube, constitué d'acier X80, d'un diamètre extérieur de 56" (pouce), soit 1422 mm, et dimensionné pour stocker de l'air à 120 bars, présente une épaisseur de paroi d'environ 40 mm ; un tube en acier X52, d'un diamètre extérieur de 48" (pouces), soit 1219 mm, et dimensionné pour stocker de l'air à 80 bars présente une épaisseur de paroi d'environ 24 mm.

L'utilisation de tubes de diamètre extérieur 48" et 56" pour la fabrication d'un réservoir selon l'invention est déjà en soi particulièrement avantageux car il s'agit de dimensions standards dans le domaine des gazoducs et des oléoducs, disponibles sur le marché. Ainsi, la fabrication des réservoirs 1 ne nécessite pas le développement de nouveaux moyens, mais simplement la transformation des tubes en réservoir. L'implantation sur site des réservoirs est également facilitée, des moyens déjà mis en œuvre sur des sites industriels pour des oléoducs et des gazoducs pouvant être récupérés pour les réservoirs 1. Ainsi, les coûts de fabrication mais également d'installation des réservoirs 1 s'en trouvent considérablement réduits.

Selon les applications, il peut être avantageux de placer plusieurs tubes bout à bout, reliés par soudure, afin d'obtenir un réservoir 1 de très grande longueur, par exemple de 50 m, Cette longueur pourra être portée à 100 m ou 250 m selon la quantité d'énergie à stocker et la configuration de la zone de stockage. La longueur du réservoir est alors avantageusement un multiple de la plus grande longueur de tubes pour un diamètre et une épaisseur de tube donnés.

La capacité du réservoir 1 de stockage des fluides peut être de quelques dizaines de m³ (mètre cube) à quelques dizaines de milliers de m³ suivant les applications.

Le réservoir 1 est équipé des supports nécessaires à son maintien.

Le réservoir 1 est muni prés d'une première extrémité d'au moins un orifice 36 du gaz relié d'une part à une source de gaz et d'autre part débouchant dans une partie contenant le gaz 2 dans le réservoir 1 de stockage des fluides, permettant l'écoulement du gaz sortant ou rentrant dans le réservoir 1 de stockage des fluides. On a représenté sur les figures l'exemple dans lequel l'orifice 36 du gaz est à la fois un orifice d'entrée et un orifice de sortie du gaz du réservoir 1 de stockage des fluides, étant entendu que l'orifice de sortie peut être distinct de l'orifice d'entrée du gaz.

L'orifice 36 du gaz, en tant qu'orifice d'entrée, est relié par une canalisation 6 résistant à la pression du gaz 2 à au moins une installation 8 de compression qui délivre du gaz 2 sous pression à stocker lorsque l'on désire stocker le gaz et, en tant qu'orifice de sortie, à au moins une installation 9 de sortie qui utilise le gaz 2 sous pression lorsque l'on désire déstocker l'air 2.

L'installation 8 de compression est constituée, dans la figure 1, d'au moins un compresseur 13 d'air accouplé à au moins un moteur électrique 14 et permet de produire et de délivrer de l'air comprimé à pression constante dans le réservoir 1 de stockage des fluides en utilisant de l'énergie électrique. La flèche 25 sur la figure 1 représente le sens de l'écoulement du gaz à la sortie de l'installation 8.

L'installation 9 de sortie est par exemple, comme illustré sur la figure 1, une installation de détente et est alors constituée d'au moins un détendeur 10 accouplé à au moins un générateur électrique 11. Une chambre 12 de combustion permet avantageusement de réchauffer l'air à l'entrée du détendeur 10. L'installation 9 de détente utilise l'air comprimé à pression constante délivré par le réservoir 1 de stockage des fluides pour produire de l'énergie électrique. La flèche 26 sur la figure 1 représente le sens de l'écoulement de l'air à l'entrée de l'installation 9 de détente.

Le dispositif permet ainsi de stocker l'énergie électrique dans le réservoir 1 de stockage des fluides sous forme de gaz comprimé, tel que de l'air comprimé, fourni par l'installation 8 de compression et de récupérer cette énergie électrique par la détente du gaz dans l'installation 9 de détente.

En variante, l'installation 9 de sortie utilise directement le gaz comprimé, par exemple dans un procédé industriel. Il a été cité dans l'introduction des exemples de domaines industriels mettant en œuvres de procédés utilisant du gaz comprimé.

Le réservoir 1 de stockage des fluides est muni prés d'une deuxième extrémité, d'au moins un orifice 35 du liquide débouchant dans une partie contenant du liquide 3 du réservoir 1 de stockage des fluides, afin de permettre l'écoulement du liquide entrant et sortant du réservoir 1 de stockage des fluides.

Sur les figures, l'orifice 35 du liquide est à la fois un orifice d'entrée et de sortie pour le liquide. Cependant, le réservoir 1 de stockage des fluides peut comprendre un orifice d'entrée du liquide et un orifice de sortie du liquide distincts.

Afin de maintenir le gaz 2 comprimé à une pression constante dans le réservoir 1 de stockage des fluides, l'orifice 35 du liquide, en tant qu'orifice d'entrée, est relié par une canalisation 7 résistant à la pression du liquide à un ensemble 15 moteur comprenant au moins une pompe 17 et au moins un moteur 18. Des moyens de décharge reliés par la canalisation 7 à l'orifice 35 de sortie de liquide permettent d'évacuer le liquide hors du réservoir 1 de stockage des fluides. Selon un mode de réalisation, les moyens de décharge comprennent au moins un ensemble 16 générateur comprenant une turbine 19 accouplée à au moins une génératrice 20 électrique.

La flèche 27 sur la figure 1 représente le sens de l'écoulement du liquide à travers la pompe 17. La pompe 17 est reliée en amont par une canalisation 21 à au moins un réservoir 22 de liquide.

La flèche 28 sur la figure 1 représente le sens de l'écoulement du liquide à travers la turbine 19. La turbine 19 est avantageusement reliée en aval par une canalisation 21 au réservoir 22 de liquide.

Il est maintenant décrit le fonctionnement du dispositif de stockage dans lequel le gaz est de l'air et le liquide est de l'eau.

Lors d'une étape dite de stockage de l'air, l'air fourni sous une pression d'entrée par l'installation 8 de compression entre dans la partie contenant de l'air 2 du réservoir 1 de stockage des fluides, à travers l'orifice 36 de l'air et demeure à une pression de stockage très proche de la pression d'entrée. L'air exerce alors une pression de stockage très proche de la pression d'entrée sur l'eau 3, soit directement soit, comme il sera vu plus loin, par l'intermédiaire de moyens de séparation de l'air et de l'eau 3, par exemple un diaphragme 23.

Sous l'effet de cette pression de l'air, l'eau 3 est évacuée de la partie inférieure du réservoir 1 de stockage des fluides à travers l'orifice 35 de l'eau.

Selon le mode de réalisation, l'eau ainsi évacuée entraîne la turbine 17 hydraulique de l'ensemble 16 générateur, ce qui permet de produire de l'énergie électrique. Un système de régulation et de commande de l'ensemble 16 générateur permet de maintenir l'air à une pression de stockage constante tout au long des opérations de stockage de l'air.

Lors d'une étape dite de déstockage de l'air 2, l'eau 3 est pompée par la pompe 17 hydraulique de l'ensemble 15 moteur à une pression quasi égale à la pression de stockage dans le réservoir 1 de stockage des fluides, et entre dans la partie inférieure du réservoir 1 de stockage des fluides par l'orifice 35 à une pression très proche de la pression de stockage. L'eau exerce alors une pression très proche de la pression de stockage sur l'air 2 dans le réservoir 1 de stockage des fluides.

Sous l'effet de cette pression exercée par l'eau, l'air est évacué du réservoir 1 des fluides à travers l'orifice 36 de l'air et alimente à une pression constante très proche de la pression de stockage l'installation 9 de sortie. Un système de régulation et de commande du l'ensemble 15 moteur permet de maintenir une pression du gaz constante tout au long des opérations de déstockage du gaz.

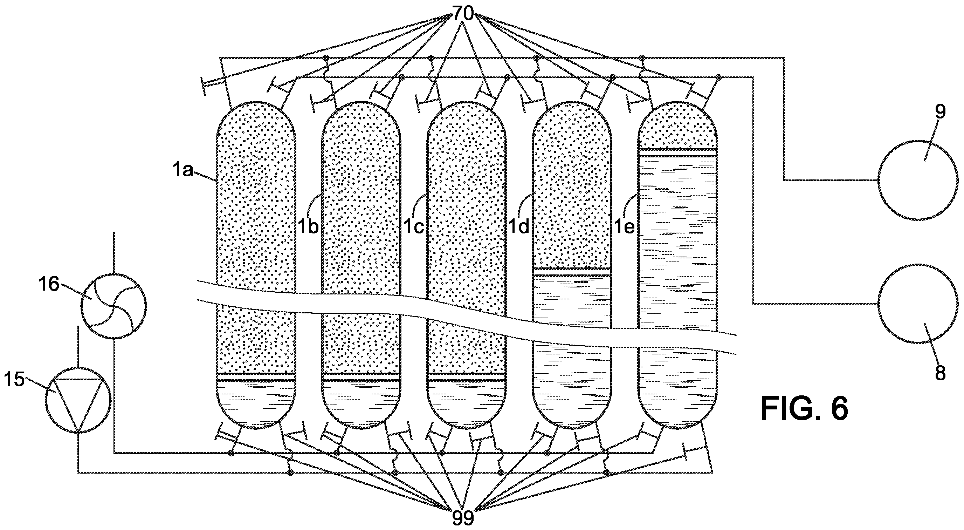

La figure 6 représente une application du dispositif de l'invention dans laquelle plusieurs réservoirs, en l'occurrence cinq réservoirs 1a à 1e, de stockage des fluides sont utilisés. Cette variante permet bien sûr d'augmenter le volume d'air stocké et par là-même la quantité d'énergie électrique stockée. En effet, la dimension transversale, par exemple le rayon dans le cas d'un réservoir de section circulaire, de chacun des réservoirs 1a à 1e de stockage des fluides est limitée compte tenu des fortes pressions intérieures et il peut être, nécessaire pour augmenter la capacité de stockage, d'utiliser un ensemble de réservoirs.

Sur l'exemple représenté, les réservoirs 1a à 1e de stockage des fluides sont tous connectés à la même installation 8 de compression de l'air, à la même installation 9 de sortie, au même ensemble 15 moteur, et donc à la même pompe 17 hydraulique, et au même ensemble 16 générateur, et donc à la même turbine 19 hydraulique. On pourra toutefois prévoir que chaque réservoir 1a à 1e de stockage des fluides est connecté à une installation 8 de compression, une installation 9 de sortie, un ensemble 15 moteur et à un ensemble 16 générateur qui lui sont propres.

Un ensemble de vannes 70 d'air, placé sur les orifices 36 d'entrée et de sortie de l'air, et un ensemble de vannes 99 d'eau, placé sur les orifices d'entrée et de sortie de l'eau, permettent d'isoler certaines connections. Il est alors possible de choisir certains réservoirs 1a à 1e de stockage des fluides fonctionnant dans une étape de stockage de l'air, c'est-à-dire dans lesquels l'air est injecté et la pression est maintenue constante grâce au système de contrôle et de commande de l'ensemble 16 générateur, et d'autres réservoirs fonctionnant dans une étape de restitution de l'air, c'est-à-dire dans lesquels le gaz est évacué et la pression est maintenue constant grâce au système de contrôle et de commande de l'ensemble moteur 15.

Le gaz 2 dans le réservoir 1 de stockage des fluides est de préférence séparé du liquide 3 par des moyens de séparation étanches aux fluides, tel qu'un diaphragme rigide et mobile 23 séparant le réservoir 1 de stockage des fluides en une partie contenant le gaz 2 et une partie contenant le liquide 3. Le diaphragme 23 définit alors une surface de séparation entre le liquide et le gaz, et est mobile avec les variations de volume du gaz et du liquide lors des opérations de stockage et de déstockage du gaz.

En effet, les moyens de séparation doivent pouvoir se déplacer lors des opérations de stockage et de déstockage du gaz, de sorte que le volume de la partie contenant le gaz diminue lorsque le gaz est déstocké tandis que le volume de la partie comprenant le liquide augmente, et, inversement, de sorte que le volume de la partie contenant le gaz augmente lorsque le gaz est stocké tandis que le volume de la partie comprenant le liquide diminue.

Le diaphragme 23 est de préférence équipé d'un ou plusieurs joints 24 d'étanchéité à sa périphérie afin de maintenir une séparation entre le gaz sous pression et le liquide dans le réservoir 1 de stockage des fluides et d'éviter les phénomènes de dissolution du gaz dans le liquide ou de pollution d'un des deux fluides par l'autre. Ainsi, les deux fluides dans le réservoir 1 de stockage des fluides exercent mutuellement une pression l'un sur l'autre par l'intermédiaire du diaphragme 23.

La nature des joints 24, notamment de par leur matériau, forme et principe d'étanchéité, est adaptée aux fluides 2 et 3, et aux conditions de stockage comme la pression et la température. Elle doit également assurer une durée de vie suffisante des joints, notamment avec une bonne résistance à l'usure résultant du frottement sur la surface interne du réservoir résultant du déplacement du diaphragme 23 lors des opérations de stockage et de déstockage du gaz.

Pour limiter l'usure du dispositif de séparation étanche aux fluides par frottement contre la paroi interne du réservoir, il peut être avantageux de recouvrir celle-ci d'un revêtement adapté pour cette fonction. Il peut notamment s'agir d'une résine époxy ou PTFE, par exemple appliquée par projection au pistolet.

Les joints 24 peuvent être des joints gonflables. Pour accroitre l'étanchéité entre le gaz et le liquide, au moins deux joints 24 peuvent être utilisés de sorte de constituer des barrages successifs.

Dans le cas représenté sur la figure 2, la surface de séparation entre l'air 2 et l'eau 3 est dans un plan horizontal. L'air 2 occupe alors nécessairement la partie supérieure du réservoir 1 de stockage des fluides et l'eau la partie inférieure du réservoir 1 de stockage des fluides. Le diaphragme 23 peut alors simplement flotter à la surface de l'eau, de manière à se déplacer avec les variations du volume d'eau. En variante, le diaphragme 23 de séparation rigide peut être remplacé par une membrane en matériau déformable séparant l'air et l'eau, de sorte que le volume des parties contenant l'eau et le gaz sont de volume variable par déformation de la membrane.

Si la surface de séparation entre l'air et l'eau n'est pas dans un plan horizontal, il est nécessaire d'utiliser un diaphragme 23 de séparation rigide spécialement conçu pour tenir compte des différentiels de pression entre le coté comprenant le liquide et le coté comprenant le gaz.

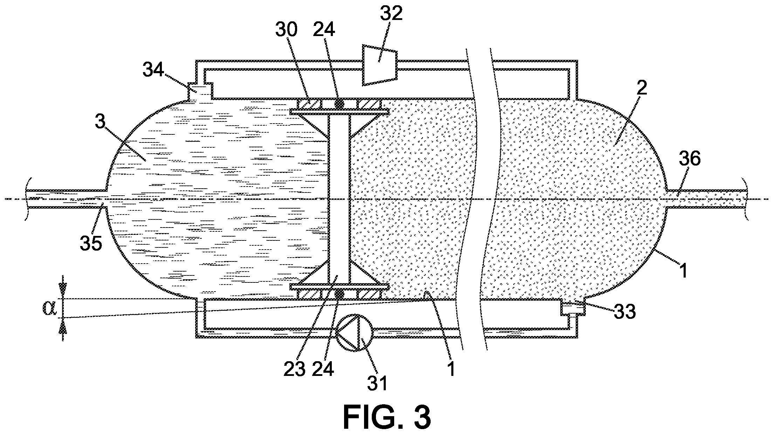

La figure 3 représente ainsi exemple de moyens de séparations entre un gaz et un liquide dans un réservoir 1 de stockage de fluides, dans lequel la surface séparation entre le gaz et le liquide n'est pas dans un plan horizontal. Par exemple, la surface de séparation est dans un plan vertical, ou dans un plan incliné de quelques degrés, par exemple entre 1 °et 10°, par rapport au plan vertical. Ce peut être le cas s'il est plus avantageux que le réservoir 1 de stockage des fluides soit en position horizontale, posé au sol, enterré, ou lorsque ses dimensions en longueur ne permettent pas une position verticale. Il est alors nécessaire que la conception du diaphragme 23, dans le plan de la surface de séparation entre le gaz 2 et le liquide 3, permette de reprendre les efforts dus aux différences entre la répartition des pressions coté liquide et celle coté gaz tout en permettant le coulissement dans le corps du réservoir 1 de stockage des fluides et en assurant l'étanchéité.

Le diaphragme 23 rigide est alors muni sur sa périphérie des surfaces 30 d'appui sur le corps du réservoir 1 de stockage des fluides, ces surfaces 30 d'appui présentant des dimensions importantes, de manière à être décalées de part et d'autre du plan du diaphragme 23, et donc de la surface de séparation entre le gaz et le liquide, afin de reprendre les moments des efforts appliqués. Ces surfaces 30 d'appui sont réalisées dans un matériau résistant à la compression sous l'effet de la pression dans le réservoir 1 de stockage des fluides et facilitant le glissement sur le corps du réservoir 1 de stockage des fluides pour déplacer le diaphragme 23.

Les surfaces 30 d'appuis peuvent être continues sur toute la circonférence du réservoir, discontinues en étant réparties de manière égale sur la circonférence du réservoir, ou encore discontinues en étant réparties inégalement, par exemple avec une plus grande surface d'appui totale sur les parties inférieure et supérieure du réservoir, là où la pression exercée par les fluides sur le diaphragme 23 est la plus élevée.

De même, la largeur des surfaces 30 d'appui peut être constante ou non sur la circonférence du réservoir. Dans le cas d'appuis discontinus, la surface unitaire de contact entre les surfaces d'appui et le réservoir peut être la même pour tous les appuis ou être différente selon les appuis.

Les appuis peuvent également comporter des mécanismes de roulement comme par exemple des roulettes permettant de faciliter le mouvement du diaphragme.

Le décalage des surfaces d'appui 30 par rapport au plan du diaphragme 23, c'est-à-dire la distance la plus grande entre un point d'une surface 30 d'appui et le plan du diaphragme 23, peut ne pas être le même pour toutes les surfaces 30 d'appui. Ainsi, il peut être plus important pour les surfaces 30 d'appui placées sur la partie inférieure du réservoir, notamment en raison d'une pression plus forte exercée par l'eau sur la partie inférieure du diaphragme 23.

Le diaphragme 23 est alors parfaitement centré dans le réservoir 1 de stockage des fluides, c'est-à-dire qu'il ne bascule pas sous l'effet des pressions exercées sur ses deux faces, et le ou les joints 24 d'étanchéité sont correctement maintenus, même lorsqu'il se déplace lors des opérations de stockage et de déstockage.

Selon leur nature, les surfaces 30 appuis peuvent également contribuer à l'étanchéité entre le gaz et le liquide.

Le diaphragme 23 ainsi muni de surfaces 30 d'appui permet, dans tout réservoir 1 de stockage de fluides, d'assurer une étanchéité entre deux fluides contenus tout en permettant au volume de la partie contenant un premier fluide et au volume contenant le deuxième fluide de varier par déplacement du diaphragme 23.

Dans le cas où la surface de séparation entre le gaz et le liquide est inclinée de quelques degrés par rapport au plan vertical, il est avantageux de disposer le réservoir 1 de stockage des fluides de telle sorte que la partie 33 la plus basse est la partie contenant le gaz et donc que la partie 34 la plus haute est la partie contenant le liquide. Dès lors, en cas de défaillance du diaphragme 23 et/ou des joints 24 d'étanchéité entre le gaz et le liquide, une fuite éventuelle du liquide 3 vers le gaz 2 au travers du diaphragme 23 va nécessairement s'écouler vers la partie 33 la plus basse du réservoir 1 de stockage des fluides, ce liquide pouvant être récupéré et ramené de l'autre côté du diaphragme 23, dans la partie contenant le liquide, par une pompe hydraulique 31 de faible puissance. De la même façon, une fuite éventuelle du gaz vers le liquide au travers du diaphragme 23 va nécessairement s'écouler vers la partie 34 la plus haute du réservoir 1 de stockage des fluides, dans la partie contenant le liquide. Ce gaz peut être ramené de l'autre coté du diaphragme 23, dans la partie contenant le gaz, par un compresseur d'air 32 de faible puissance.

La partie 33 la plus basse et la partie 34 la plus haute du réservoir 1 de stockage des fluides sont placées à des extrémités opposées du réservoir 1 de façon à ne pas gêner le mouvement complet du diaphragme 23.

Le dispositif peut être positionné dans différentes variantes et le réservoir 1 de stockage des fluides peut être à terre ou sous l'eau.

Le dispositif peut ainsi être utilisé pour du stockage de gaz destiné à alimenter un procédé industriel.

Il permet, grâce au maintien de la pression constante de stockage du gaz et à sa restitution, d'offrir des conditions très favorables au fonctionnement de l'installation de compression 8 et à l'installation de sortie 9.

Les densités de stockage sont également très supérieures à un stockage à volume constant, grâce aux pressions élevées permises dans le réservoir 1 de stockage des fluides.

Il faut également noter que les pressions usuelles d'utilisation des gaz dans les procédés industriels varient généralement de quelques bars à quelques dizaines de bars. Un stockage du gaz à ces pressions relativement faibles aurait une densité faible impliquant des coûts de stockage élevés et un grand espace occupé.

Il est donc beaucoup plus avantageux de stocker à des pressions importantes.

L'absence de dispositif de stockage de gaz économiquement intéressant oblige les industries à produire le gaz comprimé dans le même temps que son utilisation dans le procédé industriel. Il faut donc dimensionner une installation de compression spécifique aux pressions du gaz requises par le procédé industriel répondant ponctuellement aux besoins selon les étapes du procédé, alors que cette puissance pourrait être fortement diminuée en faisant fonctionner l'installation de compression de manière continue, tout du moins sur une longue durée. De plus, tout arrêt dans l'installation de compression entraîne l'arrêt de l'ensemble du dispositif industriel ce qui oblige à prévoir des installations de compression en sécurité.

Un avantage supplémentaire de stocker le gaz selon l'invention est donc présent lorsque le gaz est destiné à un procédé industriel.

Le dispositif de l'invention permet ainsi de stocker le gaz à une pression importante et avec des densités satisfaisantes.

Par ailleurs, il peut être avantageux d'utiliser toute source de gaz sous pression disponible dans le ou les procédés industriels pour alimenter même partiellement l'installation 8 de compression, et ainsi diminuer les besoins en énergie consommée par le dispositif.

Dans le cas où un autre procédé industriel mis en œuvre sur le site industriel en complément du premier, nécessiterait également un débit restreint du gaz stocké à une pression élevée plus proche de celle de stockage du gaz, il est avantageux de placer entre l'orifice 36 de sortie du gaz du réservoir 1 de stockage des fluides et l'installation 9 de détente un circuit de dérivation permettant d'alimenter en parallèle cet autre procédé avec une pression élevée. Ce circuit de dérivation pourra contenir un organe permettant de détendre le gaz à la pression requise pour le procédé.

L'équipement selon l'invention permet ainsi d'alimenter simultanément ou alternativement les deux procédés industriels avec un gaz à des pressions très différentes.

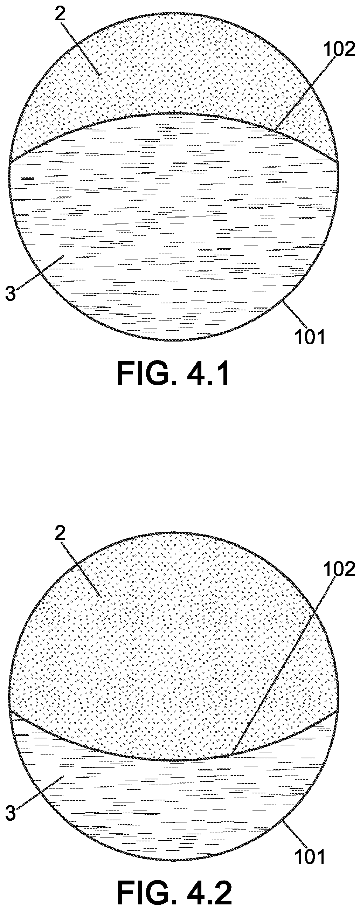

La figure 4 représente, vue en coupe transversale, une variante de réalisation dans laquelle les moyens de séparation comprennent une membrane déformable 102 fixée sur l'ensemble de sa périphérie au réservoir 101. Sur la vue 4.1, est représenté un exemple de positionnement de la membrane lorsque le réservoir contient une quantité de liquide 3 plus importante que la quantité de gaz 2. Sur la vue 4.2, est représenté un exemple de positionnement de la membrane lorsque le réservoir contient une quantité de liquide 3 plus faible que la quantité de gaz 2.

Par déformable, on entend ici la capacité de la membrane 102 à se déformer de manière élastique sous l'effet des pressions exercées par les fluides dans le réservoir 1 sur la membrane 102.

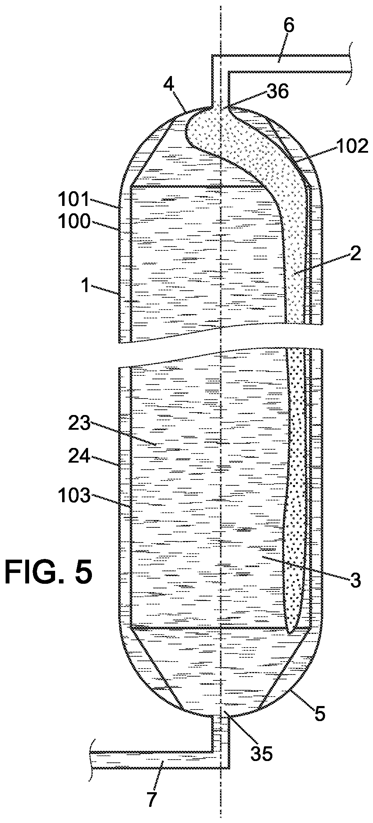

La figure 5 représente une variante de réalisation de l'invention dans laquelle les moyens de séparation comprennent une membrane déformable 102 formant une vessie ou une baudruche. La vessie se déforme sous la pression exercée par le gaz et le liquide lors de son remplissage et lors de la restitution du fluide qu'elle contient. Dans cet exemple, le réservoir est positionné à l'horizontal, le gaz se trouve à l'intérieur de la vessie, laquelle est enveloppée par le liquide, la partie haute du réservoir est celle où est placée la vessie par la poussée d'Archimède.

La vessie peut, par exemple, être en élastomère de base NBR (pour Nitrile Butadiene Rubber), IIR (pour Isobutylene Isoprene Rubber), EPDM (pour Ethylene Propylene Diene Monomer), ou NR (pour Natural Rubber). La matière et l'épaisseur de la vessie sont définies selon ses dimensions et la pression des fluides.

La membrane n'est pas forcément réalisée avec un élastomère ayant une forte élasticité. Une matière inélastique peut également être utilisée. Dans ce cas, la membrane de séparation se déploie lors du remplissage pour atteindre son volume maximal. Lors de la vidange, la pression exercée par le fluide situé à l'extérieur de la vessie permet de lui redonner son volume initial.

On peut voir représentée sur cette figure une enveloppe interne 103 principalement cylindrique permettant de maintenir la vessie dans une position définie dans le réservoir et d'éviter que la membrane ne frotte directement contre la paroi interne 100, 101 du réservoir. Avantageusement, l'enveloppe interne 103 est poreuse, par exemple réalisée avec du métal perforé, de sorte de conserver un contact avec le liquide lorsque la membrane est en appui sur l'enveloppe interne. Cette solution est applicable pour un réservoir placé horizontalement ou verticalement.

## Revendications

1. Dispositif de stockage et de restitution de fluides à pression quasi constante, lesdits fluides comprenant un gaz et un liquide, le dispositif comprenant un ensemble de réservoirs (1) sensiblement identiques, chacun des réservoirs (1) présentant une enveloppe extérieure cylindrique (100) constituée d'au moins un tube métallique (101) du type de ceux utilisés pour les gazoducs et les oléoducs, dont le diamètre extérieur est supérieur à 813 mm et le rapport entre sa longueur et son diamètre extérieur est supérieur à 8, lesdits réservoirs comprenant :
- une partie contenant le gaz et une partie contenant le liquide,
- un moyen (23) de séparation entre le gaz et le liquide dans le réservoir (1), qui comprend une membrane déformable (102),
- un orifice (36) d'entrée et un orifice (36) de sortie du gaz débouchant dans la partie contenant le gaz du réservoir (1),
- un orifice (35) d'entrée et un orifice (35) de sortie du liquide débouchant dans la partie contenant le liquide du réservoir (1),
**caractérisé en ce que** la membrane déformable (102) forme une vessie ou une baudruche.

2. Dispositif selon la revendication 1, **caractérisé en ce que** la membrane déformable (102) forme une vessie déformable sous la pression dans le réservoir (1) de stockage des fluides de sorte de contenir le gaz ou le liquide.

3. Dispositif selon la revendication 1, **caractérisé en ce que** le réservoir (1) comprend en outre une enveloppe interne (103) dans laquelle se place la membrane déformable (102).

## Patentansprüche

1. Vorrichtung zum Speichern und Abgeben von Fluiden mit quasi-konstantem Druck, wobei die Fluide ein Gas und eine Flüssigkeit umfassen, wobei die Vorrichtung eine Anordnung von im Wesentlichen identischen Behältern (1) umfasst, wobei jeder der Behälter (1) eine zylindrische Außenhülle (100) aufweist, welche aus wenigstens einem metallischen Rohr (101) von dem Typ von denjenigen gebildet ist, welche für Gasleitungen und Ölleitungen verwendet werden, dessen Außendurchmesser größer als 813 mm ist und wobei das Verhältnis zwischen seiner Länge und seinem Außendurchmesser größer als 8 ist,
wobei die Behälter umfassen:
- einen Teil, welcher das Gas aufnimmt, und einen Teil, welcher die Flüssigkeit aufnimmt,
- ein Trennmittel (23) zwischen dem Gas und der Flüssigkeit in dem Behälter (1), welches eine deformierbare Membran (102) umfasst,
- eine Eingangsöffnung (36) und eine Ausgangsöffnung (36) für das Gas, welche in dem Teil des Behälters (1) münden, welcher das Gas aufnimmt,
- eine Eingangsöffnung (35) und eine Ausgangsöffnung (35) für die Flüssigkeit, welche in dem Teil des Behälters (1) münden, welcher die Flüssigkeit aufnimmt,
**dadurch gekennzeichnet, dass** die deformierbare Membran (102) eine Blase oder einen Ballon bildet.

2. Vorrichtung nach Anspruch 1, **dadurch gekennzeichnet, dass** die deformierbare Membran (102) eine Blase bildet, welche unter dem Druck in dem Fluid-Speicherbehälter deformierbar ist, um das Gas oder die Flüssigkeit aufzunehmen.

3. Vorrichtung nach Anspruch 1, **dadurch gekennzeichnet, dass** der Behälter (1) ferner eine Innenhülle (103) umfasst, in welcher die deformierbare Membran (102) platziert ist.

## Claims

1. A device for storing and restoring fluids at a near-constant pressure, said fluids comprising a gas and a liquid, the device comprising a set of substantially identical reservoirs (1), each of the reservoirs (1) having a cylindrical outer envelope (100) consisting of at least one metal tube (101) of the type used for the gas and oil pipelines, whose outer diameter is greater than 813 mm and the ratio between the length and the outer diameter thereof is greater than 8, said reservoirs comprising:
- a portion containing the gas and a portion containing the liquid,
- separation means (23) between the gas and the liquid in the reservoir (1), which comprises a deformable membrane (102),
- an inlet orifice (36) and an outlet orifice (36) for the gas opening into the portion containing the gas of the reservoir (1),
- an inlet orifice (35) and an outlet orifice (35) for the liquid opening into the portion containing the liquid of the reservoir (1),
**characterised in that** the deformable membrane (102) forms a bladder or a balloon.

2. The device according to claim 1, **characterised in that** the deformable membrane (102) forms a deformable bladder under the pressure in the reservoir (1) for storing fluids so as to contain the gas or the liquid.

3. The device according to claim 1, **characterised in that** the reservoir (1) further comprises an inner envelope (103) in which the deformable membrane (102) is placed.
